# EUROPÄISCHE PATENTANMELDUNG

(11) **EP 2 383 104 A2**
(43) Veröffentlichungstag der Anmeldung: **02.11.2011**
(21) Anmeldenummer: 11003420.4
(22) Anmeldetag: 26.04.2011
(51) Int. Cl.: B29C 65/16, B62D 1/06, B29L 31/30

(54) **Laserverschweißen von Kunststoffteilen**

(30) Priorität: 27.04.2010 DE 102010018418
(71) Anmelder: WAREMA Kunststofftechnik und Maschinenbau GmbH, 97828 Marktheidenfeld (DE)
(72) Erfinder: Väth, Hartmut, 97837 Erlenbach (DE); Salg, Peter, 63864 Glattbach (DE)
(74) Vertreter: Erb, Henning

(57) **Zusammenfassung**

Kunststoffteile (16, 17), die wenigstens eine zu verschwei-βende erste Kunststoffschicht (24) und wenigstens eine opake Schicht (22) aufweisen, werden mittels Laserschweißen verschweißt. Es wird vorgeschlagen, mit dem Laserlicht die opake Schicht (22) zu durchleuchten, wobei durch gezielte Auswahl der Wellenlänge des Laserlichts, Fokussieren des Laserlichts in der Schweißstelle (30) und/oder Bündeln mehrerer Laserstrahlen in der Schweißstelle an dieser die erforderliche Energie in das Material eingebracht wird, gleichzeitig aber die opake Schicht vor einer schädlichen Wärmeeinwirkung geschützt wird. Das Verfahren eignet sich insbesondere zur Herstellung von Hohlkörpern mit verdeckten Schweißstellen (30), beispielsweise Lenkrädern (10).

## Beschreibung

Die vorliegende Erfindung befasst sich mit dem Laserverschweißen von Kunststoffteilen, die wenigstens eine zu verschweißende erste Kunststoffschicht und wenigstens eine opake Schicht aufweisen.

Derartige Teile werden beispielsweise in der Art von Dekorteilen oder -schalen eingesetzt, wobei als opake Schicht Dekorschichten zum Einsatz kommen, beispielsweise in der Form von Echtholzfurnieren.

Aus der DE 20 2004 001 133 U1 ist das Verschweißen von mit einer transparenten Deckschicht versehenen Dekorteilen bekannt. Nicht verschweißbar ist mit dem dort aufgezeigten Vorgehen eine unterhalb des Dekors liegende Trägerschicht, es ist lediglich beschrieben, mit Hilfe von Absorptionsmittel die Deckschicht stumpf zu verschweißen.

Die Aufgabe der vorliegenden Erfindung besteht darin, auch eine unterhalb der opaken Schicht liegende erste Kunststoffschicht mittels Lasertechnik zu verschweißen.

Erfindungsgemäß wird die Aufgabe durch ein Verfahren gelöst, bei welchem mit dem Laserstrahl die opake Schicht durchleuchtet wird, wobei durch gezielte Auswahl der Wellenlänge des Laserlichts, Fokussieren des Laserstrahls in der Schweißstelle und/oder durch Bündeln mehrerer Laserstrahlen in der Schweißstelle an dieser die erforderliche Energie in das Material eingebracht wird, gleichzeitig aber die opake Schicht vor einem schädlichen Wärmeeintrag geschützt wird.

Es hat sich gezeigt, dass überraschenderweise durch die relativ einfach beherrschbaren Maßnahmen der Auswahl der Wellenlänge des Laserlichts, das Fokussieren des Strahls und/oder das Bündeln mehrerer Laserstrahlen aus unterschiedlichen Quellen ein Verschweißen durch die opake Schicht hindurch möglich ist, selbst wenn es sich bei dieser opaken Deckschicht um eine wärmeempfindliche Dekorschicht, beispielsweise in der Ausgestaltung eines Echtholzfurniers handelt.

Mit dem erfindungsgemäßen Verfahren lassen sich als besonderen Vorteil auch Hohlkörper, die aus wenigstens zwei schalenförmigen Kunststoffteilen aufgebaut sind, mittels des Laserschweißens herstellen, obgleich die Schweißstellen vollständig durch die opake Schicht verdeckt sind. Dadurch ergeben sich erhebliche Kostenvorteile bei der Herstellung solcher Hohlkörper. Gleichzeitig wird deren Stabilität dadurch erhöht, dass die Kunststoffteile im Bereich der beispielsweise auch aus faserverstärktem Kunststoff bestehenden Trägerschicht verbunden werden, was beispielsweise im Bereich von Kraftfahrzeugen wegen der strengen Sicherheitsanforderungen an Dekorteile besonders vorteilhaft ist.

Um die Kunststoffteile in einer bestimmten Position zueinander besser fixieren zu können, ist in einer Weiterbildung des Verfahrens vorgesehen, dass an den zu verbindenden Kunststoffteilen korrespondierende Formgebungen vorgesehen werden, beispielsweise in der Form von Absätzen oder Schrägen. Dabei ist es auch unerheblich, wenn mit dem Laserlicht die erste Kunststoffschicht eines der beiden Kunststoffteile durchstrahlt werden muss, bis es an die Schweißstelle gelangt, da in gleicher Weise wie bei dem Durchstrahlen der opaken Schicht auch die in der Regel nicht transparente erste Kunststoffschicht durchleuchtet werden kann.

Das Verfahren eignet sich auch zum Verschweißen von Kunststoffteilen, bei welchen die opake Schicht zwischen der ersten Kunststoffschicht und einer weiteren, transparenten Kunststoffschicht liegt, wobei in einer einzigen Aufspannung des Werkstückes zunächst die transparenten Kunststoffschichten der beiden Kunststoffteile und anschließend unter Durchleuchtung der transparenten Kunststoffschicht und der zwischenliegenden opaken Schicht die ersten Kunststoffschichten der beiden Kunststoffteile verschweißt werden.

Auch bei Formteilen, die keinen Hohlkörper bilden, und theoretisch von der Rückseite her verschweißt werden könnten, bietet das erfindungsgemäße Verfahren den Vorteil, dass beide Kunststoffschichten in einer Aufspannung verschweißt werden können, wodurch sich Kostenvorteile bei der Herstellung ergeben.

Gegenstand der vorliegenden Erfindung ist auch ein Formteil, das wenigstens zwei mehrschichtige Kunststoffteile mit jeweils einer opaken Schicht und wenigstens einer ersten Kunststoffschicht aufweist, wobei die Kunststoffschichten mittels eines Verfahrens nach einem der Ansprüche 1 bis 9 verschweißt sind und die Schweißstellen des Formteils durch die opake Schicht wenigstens teilweise verdeckt sind. Ein solches Formteil kann, wie bereits erwähnt, als Hohlkörper ausgebildet sein und an seiner Außenfläche mit einer transparenten weiteren Kunststoffschicht versehen sein. Als Beispiel für ein solches Formteil kann ein Lenkradkranz genannt werden, wobei die Kunststoffteile einen Lenkradkern ummanteln.

Nachfolgend wird anhand der beigefügten Zeichnungen näher auf Ausführungsbeispiele der Erfindung eingegangen. Es zeigen:
- Fig. 1: einen Querschnitt durch einen Lenkradkranz;
- Fig. 2: ein vergrößertes Detail A aus Fig. 1;
- Fig. 3: einen Querschnitt einer weiteren Ausführungsform eines Lenkradkranzes;
- Fig. 4: ein vergrößertes Detail A aus Fig. 3.

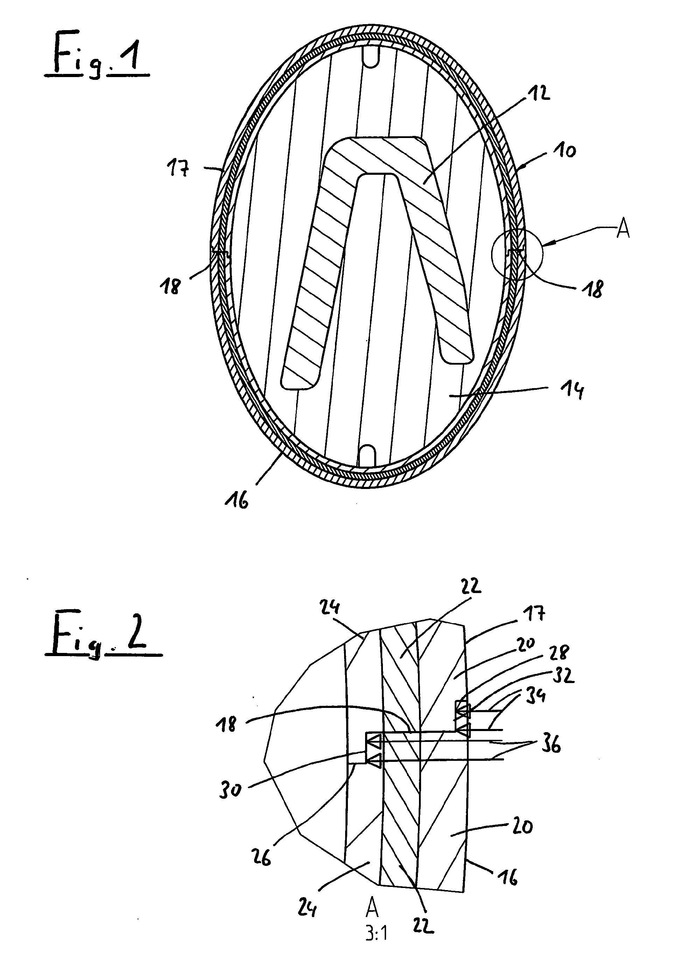

Fig. 1 zeigt einen Lenkradkranz 10, der einen Stahlkern 12 aufweist, der mit einer Kunststoffmasse 14 ummantelt bzw. umschäumt ist. Zu Dekorzwecken ist die Kunststoffmasse 14 mit zwei Kunststoffdekorteilen 16, 17 in der Form von Halbschalen umgeben, die an Trennfugen 18 miteinander verschweißt sind. Die Kunststoffdekorteile 16, 17 besitzen jeweils einen dreischichtigen Aufbau, der aus einer äußeren transparenten Kunststoffschicht 20, einer mittleren Dekorschicht in der Form eines Edelholzfurniers 22 sowie einer inneren, an der Kunststoffmasse 14 anliegenden Trägerschicht 24 aus einem faserverstärkten Kunststoff besteht. Die transparente Kunststoffschicht 20 und die Trägerschicht 24 der beiden Dekorkunststoffteile 16, 17 sind im Bereich der Trennfuge 18 mit korrespondierenden Absätzen 26, 28 ausgebildet, so dass sich bei dem gezeigten Ausführungsbeispiel parallel zur Dekorschicht 22 verlaufende Schweißstellen 30, 32 ergeben. Bei der Herstellung werden zunächst die beiden Dekorschalen 16, 17 um den Kern 14 angeordnet und in der gewünschten Position fixiert. Anschließend wird mit Hilfe eines Laserstrahls, der bei 34 durch die Pfeile veranschaulicht ist, zunächst die Schweißstelle 32 zwischen den beiden transparenten Schichten 20 der aneinanderstoßenden Kunststoffdekorteile 16, 17 verschweißt.

Anschließend werden die Laserstrahlen, wie bei 36 veranschaulicht, durch die transparente Deckschicht 20, die Dekorschicht 22 und die Trägerschicht 24 des im gezeigten Beispiel untenliegenden Kunststoffdekorteils 16 geleitet, um den zum Verschweißen notwendigen Energieeintrag in die Schweißstelle 30 einzubringen. Die Wellenlänge des Laserlichts 36 wird dabei so gewählt, dass in der Dekorschicht 22 kein schädigender Wärmeeintrag erfolgt. Weitere oder alternative Maßnahmen zur Schonung der Dekorschicht 22 können das Fokussieren eines aufgeweiteten Laserstrahls auf die Schweißstelle 30 oder das Bündeln mehrerer Laserstrahlen aus unterschiedlichen Laserquellen auf die Schweißstelle 30 sein.

Nach dem Verschweißen der beiden Kunststoffdekorteile 16, 17 ergibt sich ein besonders stabiler Lenkradkranz 10, dessen Schalen nicht nur im Bereich der transparenten Deckschicht 20, sondern auch im Bereich der faserverstärkten Trägerschicht 24 miteinander verschweißt sind. Beide Schweißstellen können dabei in einer einzigen Aufspannung des Werkstückes durchgeführt werden, wodurch sich die Herstellkosten erheblich senken lassen.

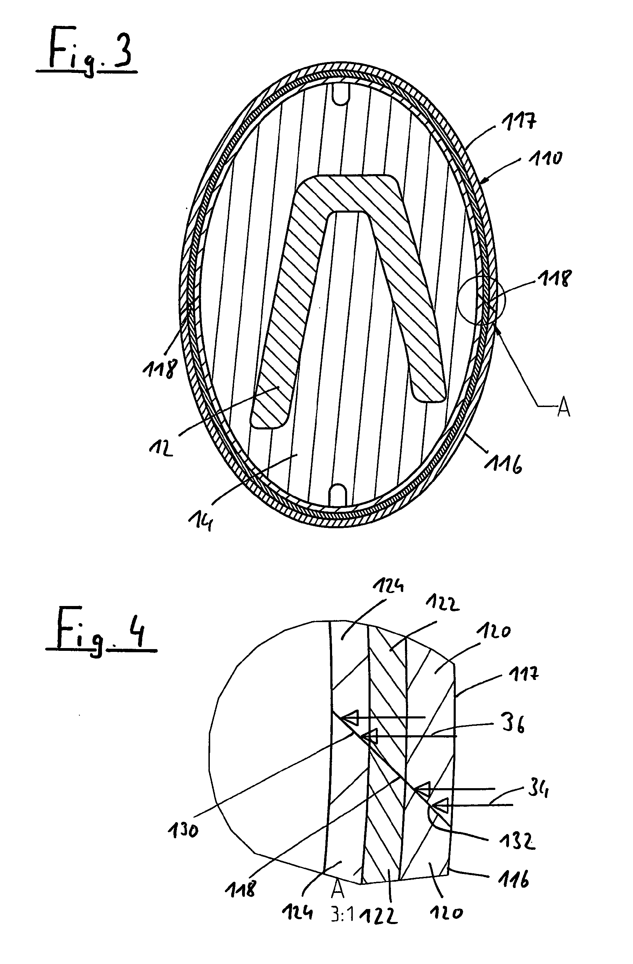

In Fig. 3 und 4 ist ein weiterer Lenkradkranz 110 gezeigt, der sich von dem zuvor erörterten Lenkradkranz 10 lediglich durch die Ausrichtung der Trennfugen 118 zwischen den beiden Kunststoffdekorteilen 116, 117 unterscheiden. Die Trennfuge 118 läuft bei dieser Ausführungsform ungefähr im Winkel von 45° zu der Dekorschicht 122. Absätze sind nicht vorgesehen. Auch hier wird mittels des Laserlichts 34 zunächst eine Schweißstelle 132 im Bereich der transparenten Dekorschicht 120 verschweißt, während anschließend unter Durchleuchtung des opaken Dekors 122 eine Schweißstelle 130 zwischen den beiden Kunststoffdekorteilen 116, 117 im Bereich der faserverstärkten Trägerschicht 124 verschweißt wird.

Neben den gezeigten Lenkradkränzen 10, 110 lassen sich mittels des beschriebenen Verfahrens auch andere Hohlkörper mittels Lasertechnik miteinander verschweißen, bei welchen Schweißstellen durch eine opake Schicht verdeckt sind. Auch Formteile, deren Schweißstellen an und für sich zugänglich sind, lassen sich vorteilhaft mittels des beschriebenen Verfahrens verschweißen, wenn beidseitig der Dekorschicht zu verschweißende Kunststoffschichten liegen, die dann in einer Aufspannung nacheinander verschweißt werden können.

## Patentansprüche

1. Laserverschweißen von Kunststoffteilen (16, 17), die wenigstens eine zu verschweißende erste Kunststoffschicht (24) und wenigstens eine opake Schicht (22) aufweisen, **dadurch gekennzeichnet, dass** mit dem Laserlicht (36) die opake Schicht (22) durchleuchtet wird, wobei durch gezielte Auswahl der Wellenlänge des Laserlichts, Fokussieren des Laserstrahls in der Schweißstelle (30) und/oder durch Bündeln mehrerer Laserstrahlen in der Schweißstelle (30) an dieser die erforderliche Energie in das Material eingebracht wird, gleichzeitig aber die opake Schicht (22) vor einem schädlichen Wärmeeintrag geschützt wird.

2. Laserschweißen nach Anspruch 1, **dadurch gekennzeichnet, dass** als opake Schicht eine Dekorschicht durchleuchtet wird.

3. Laserverschweißen von Kunststoffteilen (16, 17) nach Anspruch 2, **dadurch gekennzeichnet, dass** als Dekorschicht (22) Echtholzfurnier eingesetzt wird.

4. Laserverschweißen von Kunststoffteilen (16, 17) nach einem der vorhergehenden Ansprüche, **dadurch gekennzeichnet, dass** die erste Kunststoffschicht (24) als Trägerschicht aus verstärktem Kunststoff hergestellt wird.

5. Laserverschweißen von Kunststoffteilen nach einem der vorhergehenden Ansprüche, **dadurch gekennzeichnet, dass** an den zu verschweißenden Kunststoffteilen (16, 17) korrespondierende Formgebungen (18; 118) vorgesehen werden.

6. Laserverschweißen von Kunststoffteilen nach Anspruch 5, **dadurch gekennzeichnet, dass** die Formgebungen durch Trennfugen (18; 118) mit Absätzen (26, 28) bzw. Schrägen ausgebildet werden.

7. Laserverschweißen von Kunststoffteilen nach einem der vorhergehenden Ansprüche, **dadurch gekennzeichnet, dass** Kunststoffteile (16, 17) verschweißt werden, bei welchen die opake Schicht (22) zwischen der ersten Kunststoffschicht (24) und einer weiteren, transparenten Kunststoffschicht (16) liegt, wobei in einer Aufspannung zunächst die transparenten Kunststoffschichten (20) der Kunststoffteile (16, 17) und anschließend unter Durchleuchtung der transparenten Schicht (20) und der opaken Schicht (22) die ersten Kunststoffschichten (24) der beiden Kunststoffteile (16, 17) verschweißt werden.

8. Laserverschweißen von Kunststoffteilen nach einem der vorhergehenden Ansprüche, **dadurch gekennzeichnet, dass** die Kunststoffteile schalenförmig ausgebildet und zu einem Hohlkörper verschweißt werden.

9. Laserverschweißen von Kunststoffteilen nach Anspruch 8, **dadurch gekennzeichnet, dass** der Hohlkörper durch das Laserverschweißen verschlossen wird.

10. Formteil, das wenigstens zwei mehrschichtige Kunststoffteile (16, 17) mit jeweils einer opaken Schicht (22) und wenigstens einer ersten Kunststoffschicht (24) aufweist, wobei die Kunststoffschichten der Kunststoffteile (16, 17) nach einem Verfahren der Ansprüche 1 bis 9 verschweißt sind und die Schweißstellen des Formteils (10; 110) durch die opake Schicht (22) wenigstens teilweise verdeckt sind.

11. Formteil nach Anspruch 10, **dadurch gekennzeichnet, dass** es ein Hohlkörper ist.

12. Formteil nach Anspruch 10 oder 11, **dadurch gekennzeichnet, dass** es an der Außenfläche mit einer transparenten weiteren Kunststoffschicht (20) versehen ist.

13. Formteil nach einem der Ansprüche 10 bis 12, **dadurch gekennzeichnet, dass** es als Lenkradkranz (10) ausgebildet ist, wobei die Kunststoffteile (16, 17) einen Lenkradkern (12, 14) ummanteln.
